# FASCICULE DE BREVET EUROPEEN

(11) **EP 0 484 239 B1**
(45) Date de publication et mention de la délivrance du brevet: **17.04.1996**
(21) Numéro de dépôt: 91402910.3
(22) Date de dépôt: 30.10.1991
(51) Int. Cl.: F23G 5/30, F23J 7/00, F23J 15/00, F23L 15/00, F22B 31/00

(54) **Procédé d'incinération de déchets urbains dans une unité comportant un foyer à lit fluidisé et une chaudière, avec épuration intrinsèque des fumées**
Verbrennungsverfahren für Stadtmüll in einer Einheit, die eine Wirbelschichtfeuerung und einen Kessel enthält mit einer inneren Reinigung der Abgase
Incineration method for urban waste in a unit comprising a fluidised bed furnace and a boiler with internal purification of fumes

(30) Priorité: 02.11.1990 FR 9013626
(43) Date de publication de la demande: 06.05.1992
(73) Titulaire: S.A. "COMPAGNIE GENERALE DE CHAUFFE", F-59350 Saint André (FR)
(72) Inventeur: Sinquin, Roger, F-75020 Paris (FR); Petrovic, Alexandre, F-78400 Chatou (FR)
(74) Mandataire: CABINET BONNET-THIRION

(56) Documents cités:
- EP-A- 0 005 965
- EP-A- 0 238 048
- EP-A- 0 388 284
- DE-A- 3 139 080
- DE-A- 3 911 767
- DE-C- 3 741 842
- FR-A- 2 583 305
- FR-A- 2 587 238
- GB-A- 2 178 674
- PATENT ABSTRACTS OF JAPAN vol. 9, no. 60 (M-364) 16 Mars 1985 & JP-A-59 195 019 (EBARA SEISAKUSHO KK)

## Description

L'invention se rapporte à un procédé d'incinération de déchets urbains ou analogues, avec épuration intrinsèque des fumées, où l'on introduit les déchets, préalablement fragmentés à une granulométrie appropriée, dans un foyer à lit fluidisé dense alimenté à sa base en air comburant primaire, où brûlent des parties fixes tandis que s'en dégagent des parties volatiles comprenant, avec des gaz combustibles, des polluants tels qu'oxydes de soufre et gaz halogénés notamment, et emportant des particules solides ; on injecte de l'air comburant secondaire dans une chambre de post-combustion surmontant le foyer à lit fluidisé, où brûlent lesdits gaz combustibles avec formation de fumées, et l'on récupère l'énergie thermique des fumées dans une chaudière avec des parois munies de tubes d'eau, divisée par des chicanes en parcours verticaux successifs, alternativement ascendants et descendants, le premier parcours, ascendant, prolongeant la chambre de post-combustion.

D'une façon générale, l'épuration des fumées des fours d'incinération est soumise à des exigences de plus en plus contraignantes pour éviter des détériorations irréversibles de l'environnement. Le problème devient particulièrement aigu lorsqu'il s'agit de l'incinération de déchets urbains ou analogues, tels que déchets végétaux et déchets industriels, en raison de la variabilité de composition, de pouvoir calorifique et de teneur en humidité de ces déchets, qui entraînent des variations des conditions de fonctionnement des foyers d'incinération, et en corollaire de composition des fumées brutes.

Le document FR-A-2 583 305 décrit un procédé d'incinération de déchets dans un foyer à lit fluidisé.

Les documents DE-A-3 911 767 et DE-C-3 741 842 enseignent, pour fixer efficacement les oxydes de soufre et les gaz halogénés dégagés par les foyers de chaudières, d'injecter un solide basique, CaCO₃ ou Ca(OH)₂ à au moins deux emplacements sur le parcours des gaz de combustion, un premier dans le foyer lui-même où la température est élevée, 800°-1100°C (DE-A-3 911 767) et 1100°-1200°C (DE-C-3 741 842) pour fixer les oxydes de soufre, et un second en aval où la température est plus basse, 700-800°C (DE-C-3 741 842) et 500°C ou moins (DE-A-3 911 767) pour fixer les gaz halogénés (HF et HCI).

En effet, la composition des fumées dépend non seulement de la composition du combustible, mais également des températures atteintes au cours des diverses phases de la combustion et de la vitesse d'évolution de la température des fumées. Ainsi les teneurs en dioxines, furannes et oxydes d'azote des fumées brutes peuvent varier dans des proportions considérables en fonction de l'évolution des températures suivant le trajet des fumées.

Pour des installations d'incinération de déchets, l'utilisation de foyers à lits fluidisés tend à se répandre, ces foyers à lits fluidisés permettant un réglage beaucoup plus souple des conditions de combustion.

Parmi les foyers à lits fluidisés, l'intérêt se porte surtout sur les lits fluidisés circulants, bien adaptés à la combustion des charbons. Toutefois les foyers à lits fluidisés denses présentent l'avantage d'une séparation presque complète des combustions des parties fixes du combustible (carbone et produits hautement pyrolysés) dont la combustion va se confiner presque entièrement dans le lit fluidisé, et des parties combustibles volatiles dont la combustion va s'effectuer en présence de l'air secondaire dans la chambre de post-combustion.

En outre les lits fluidisés denses sont plus tolérants sur la granulométrie du combustible.

Mais avec ces foyers à lits fluidisés denses, s'il est possible de réduire les teneurs des fumées en produits polluants formés au cours de la combustion suite à des conditions de combustion défavorables, tels les oxydes d'azote, le monoxyde de carbone, les dioxines et les furannes, il n'en est pas de même pour les polluants de masse, qui résultent inéluctablement de la combustion de certains composants de déchets, tels les oxydes de soufre et les gaz halogénés, chlorure et fluorure d'hydrogène, qui doivent être éliminés de toute façon avant que les fumées puissent être dispersées dans l'atmosphère.

Or ces polluants de masse se manifestent essentiellement par leur caractère corrosif à basse température. L'élimination en aval, avant la dispersion par la cheminée, est inefficace pour protéger les parties aval de la chaudière contre la corrosion. Or celle-ci a pour conséquence, outre une usure prématurée des installations, des pertes de rendement de récupération d'énergie en raison de la limitation du refroidissement des fumées nécessaire.

La présente invention a pour objectif un procédé d'incinération de déchets urbains ou analogues qui intègre l'épuration des fumées au processus de combustion, et contrôle efficacement les conditions de combustion et leur évolution du foyer à la sortie de la chaudière, en sorte que les fumées soient pratiquement débarrassées des polluants gazeux au sortir de la chaudière.

A cet effet, l'invention propose un procédé d'incinération de déchets urbains et analogues, avec épuration intrinsèque des fumées, où l'on introduit les déchets préalablement fragmentés à une granulométrie appropriée, dans un foyer à lit fluidisé dense alimenté à sa base en air comburant primaire, où brûlent des parties fixes, tandis que s'en dégagent des parties volatiles comprenant, avec des gaz combustibles, des polluants tels qu'oxydes de soufre et gaz halogénés notamment, et emportant des particules solides ; on injecte de l'air comburant secondaire dans une chambre de post-combustion surmontant le foyer à lit fluidisé, où brûlent lesdits gaz combustibles avec formation de fumées ; et l'on récupère l'énergie thermique des fumées dans une chaudière avec des parois munies de tubes d'eau, divisée par des chicanes en parcours verticaux successifs, alternativement ascendants et descendants, le premier parcours, ascendant, prolongeant la chambre de post-combustion, procédé caractérisé en ce que, la chaudière étant divisée en au moins trois parcours de fumée, on introduit dans le lit fluidisé du calcaire en excès stoechiométrique au moins par rapport aux composés soufrés, comptés en oxydes de soufre ; on injecte, en début de troisième parcours ascendant, de la chaux pulvérulente en quantité au moins suffisante pour neutraliser les gaz halogénés ; on recueille les solides pulvérulents en partie basse entre les deuxième et troisième parcours et on introduit ces solides pulvérulents dans le foyer à lit fluidisé.

L'introduction de calcaire dans le lit fluidisé a pour résultat de fixer, à l'état de sulfate de calcium, pratiquement tous les oxydes de soufre qui naissent de la combustion des composés sulfurés dans le lit fluidisé, et à l'état de chlorure et fluorure de calcium une part non négligeable des gaz halogénés qui se seraient dégagés.

Par ailleurs la température de la chambre de post-combustion et les conditions d'introduction d'air peuvent être réglées pour minimiser la formation d'oxydes d'azote, de dioxines et de furannes, tandis que la longueur de trajet dans les parcours successifs de la chaudière assure un refroidissement régulier des fumées, ce qui réduit sensiblement la teneur des fumées en composés endothermiques métastables.

L'injection de chaux en début de troisième parcours assure une neutralisation efficace des gaz halogénés restant dans les fumées, celles-ci ayant atteint une température particulièrement appropriée pour la neutralisation.

Enfin le retour des solides pulvérulents de la partie basse entre les deuxième et troisième parcours assure un taux d'imbrûlés particulièrement bas dans les cendres.

De préférence on ajuste corrélativement la température et le débit de l'air primaire en sorte de maintenir le lit dans une plage de température prédéterminée, comprise entre 800° et 900°C, afin que les parties fixes se consument pratiquement totalement, tandis que les parties volatiles peuvent brûler efficacement dans la chambre de post-combustion.

De préférence on analyse en permanence la teneur en oxygène des fumées, et l'on règle le débit d'air secondaire pour maintenir cette teneur entre 5,5 et 7,5 %. Ces taux correspondent à un excès d'air global compris entre 40 et 60 %.

De préférence également le rapport stoechiométrique entre le calcaire introduit dans le lit et la teneur en soufre des déchets, comptée en oxydes de soufre est compris entre 2,5 et 3, valeur déterminée expérimentalement.

En disposition préférée un quatrième parcours, descendant, fait suite au troisième parcours, pour amener la température des fumées à une valeur suffisamment basse, ce qui améliore le rendement de l'installation.

On placera de préférence à la suite de ce quatrième parcours un échangeur, dit économiseur, pour le réchauffage de l'eau d'alimentation de la chaudière. On arrive ainsi à abaisser la température des fumées jusqu'à 140°C environ, température où les métaux lourds se condensent. Ces métaux lourds seront ainsi éliminés avec les poussières résiduelles avant que les fumées soient envoyées à la cheminée.

L'injection de chaux, en début de troisième parcours, sera particulièrement efficace si on exécute cette injection pneumatiquement dans un jet d'air porteur, le jet étant dirigé verticalement en direction ascendante, pour une durée de contact maximale entre le jet de chaux et les fumées, ascendantes dans le troisième parcours.

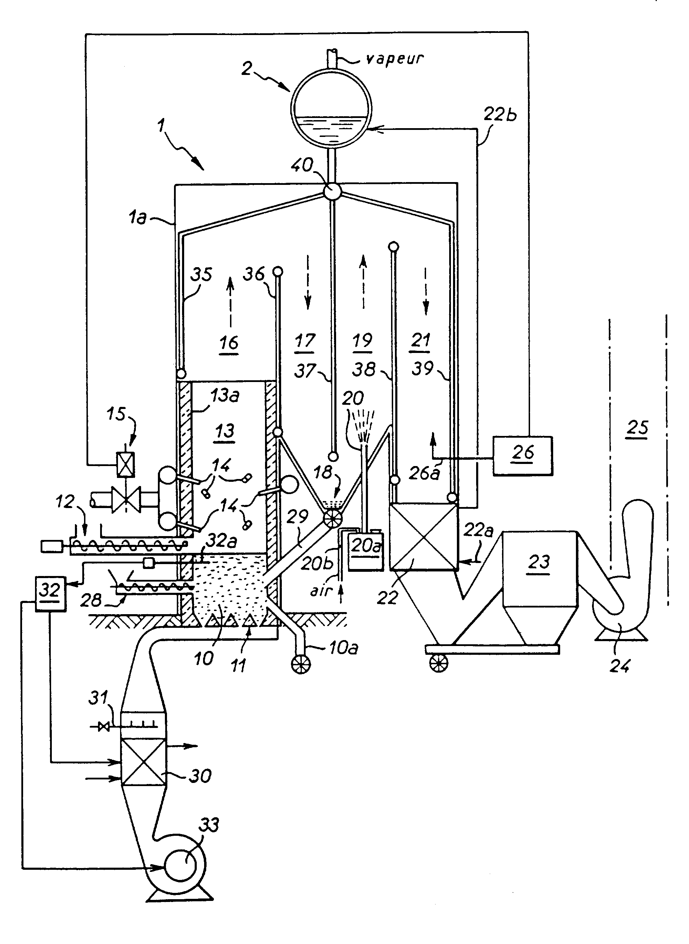

Des caractéristiques secondaires et les avantages de l'invention ressortiront d'ailleurs de la description qui va suivre à titre d'exemple, en référence à la figure unique annexée.

Celle-ci représente schématiquement une chaudière à foyer à lit fluidisé, équipée de façon appropriée à mettre en oeuvre le procédé de l'invention.

La chaudière 1, selon la représentation de la figure, comporte une enveloppe générale 1a qui contient un foyer à lit fluidisé 10, dense, surmonté par une chambre de postcombustion 13, suivis par quatre parcours de fumée 16, 17, 19 et 21 verticaux successifs et à direction alternée, les premier 16 et troisième 19 parcours étant ascendants, tandis que les deuxième 17 et quatrième 21 sont descendants. Ces parcours sont délimités par des parois 35, 36, 37, 38 et 39 formant chicanes et incorporant des tubes d'eau connectés par des collecteurs tels que 40, communiquant avec un bouilleur 2. On notera que les connexions de tubes d'eau sont très schématiquement représentées, et que leur disposition réelle relève des connaissances de l'homme du métier.

Après le quatrième parcours 21, les fumées traversent un échangeur 22, dit économiseur, qui reçoit en 22a l'eau alimentaire pour la chauffer jusqu'à 120°C environ et fournir cette eau alimentaire chauffée au bouilleur 2 à travers la canalisation 22a. Les fumées, refroidies jusqu'à 140°C, traversent un dépoussiéreur 23 à manches, pour être reprises par un ventilateur de tirage 24 qui les refoule en base d'une cheminée 25.

Le lit fluidisé 10 est alimenté en air de fluidisation ou air primaire à travers une grille à pyramides 11, l'air de fluidisation refoulé par un ventilateur 33 parvenant à la grille 11 après avoir traversé un échangeur 30 alimenté en vapeur de soutirage qui chauffe cet air. Entre l'échangeur 30 et la grille 11 se trouve une rampe d'allumage 31, alimentée en gaz naturel lors de la mise en route du foyer à lit fluidisé.

Les déchets urbains sont déversés en surface de lit fluidisé après tri, où sont éliminés pour l'essentiel les verres, ferrailles et matières plastiques recyclables, et un broyage qui assure que les particules les plus volumineuses ne dépassent pas 150 mm dans leur plus grande dimension, par une vis sans fin 12 agencée pour éviter des fuites de fumée. Les cendres sont évacuées par un conduit 10a partant de la base du foyer 10.

Les parois du foyer 10 et de la chambre de postcombustion 13 qui le surmonte sont garnies de réfractaire 13a, en briques de carbure de silicium. La chambre de postcombustion 13 est munie de buses 14 alimentées en air secondaire à travers un registre de réglage 15. Les buses 14 sont réparties sur la périphérie de la chambre de postcombustion 13 et orientées de telle sorte qu'elles engendrent de fortes turbulences, pour que les gaz combustibles émanant du lit fluidisé 10 puissent brûler dans toute la section de la chambre 13.

Tout ce qui précède ne se distingue pas fondamentalement des dispositions classiques.

Selon l'invention, le lit fluidisé 10 comporte en outre un alimenteur à vis sans fin 28 qui introduira dans le foyer 10 du calcaire en particules, par exemple du genre cru de cimenterie, et un couloir d'alimentation 29 qui part de la base en trémie 18, de la jonction entre les deuxième et troisième parcours de fumées 17 et 19 respectivement, de façon que les particules volantes, entraînées depuis le foyer 10, qui se déposent dans cette trémie 18, retournent au foyer 10, pour en achever la combustion. On remarquera que le lit fluidisé 10 ne comporte pas d'échangeur noyé.

En outre un dispositif pyrométrique 32a détermine en permanence la température du lit fluidisé, et attaque l'entrée d'un régulateur 32 capable d'agir de façon ordonnée sur le débit d'air primaire fourni par le ventilateur 33, et la température d'injection de cet air primaire, déterminée par le réglage de l'échangeur 30.

Par ailleurs, à la partie inférieure du troisième parcours 19, ascendant, est disposé un injecteur 20, vertical, qui injecte, dans le flux ascendant de fumée, un jet ascendant de chaux pulvérisée, propulsée hors d'un mélangeur statique 20a par de l'air comprimé introduit par la canalisation 20b.

En outre, un analyseur de taux d'oxygène 26 prélève, à travers une canne 26a, des fumées en fin de quatrième parcours 21, et agit sur le registre 15 d'introduction d'air secondaire pour maintenir la teneur en oxygène dans les fumées entre 5,5 et 7,5 %, qui correspond à un excès global d'air de combustion compris entre 40 et 60 %.

Le régulateur 32 sera ajusté de telle sorte que la température dans le lit fluidisé soit comprise entre 800° et 900°C, typiquement 850°C. Compte tenu de la composition moyenne des déchets urbains, typiquement : Pouvoir calorifique inférieur PCI 8 000-13 000 kJ/kg

| | |
|---|---|
| Pouvoir calorifique inférieure PCI | 8 000- 13 000 kJ/kg |
| Teneur en matières volatiles | 65-75 % |
| Humidité | 25-35 % |
| Cendres | 10-25 % |

les conditions opératoires sont sensiblement comme suit :

| | |
|---|---|
| Rapport des volumes d'air primaire/air secondaire | 40/60 environ |
| Vitesse de fluidisation | 1-1,5 m/s |
| Vitesse des fumées dans la chambre de post-combustion | 3,5-4,5 m/s |
| Température en limite du réfractaire 13a | 1 200°C |
| Température en sortie de premier parcours | 900°C |
| Temps de séjour à plus de 850°C | 2,5 à 3,5 sec. |
| Température des fumées à la jonction entre deuxième 17 et troisième 19 parcours | 500-600°C |
| Température des fumées à l'entrée de l'économiseur 22 | 350°C environ |
| Température des fumées en sortie d'économiseur | 140°C environ |

Le rapport stoechiométrique entre calcaire injecté dans le lit fluidisé 10 et teneur en soufre des déchets, comptée en oxydes de soufre SO₂ et SO₃, est compris entre 2,5 et 3. Cela correspond à une fixation pratiquement totale des composés du soufre sous forme de sulfate de calcium, et d'une partie des composés halogénés sous forme de chlorure et fluorure de calcium.

L'injection de chaux pulvérisée dans le troisième parcours 19, dans les fumées à 500°-600°C, achève la fixation des composés halogénés, sous forme de chlorure et fluorure de calcium, qui pour partie sont dirigés vers le foyer 10 par le couloir 29, et pour le reste sont arrêtés dans le dépoussiéreur.

On notera que les métaux lourds sont pratiquement condensés dans les fumées refroidies à 140°C, et seront retenus dans les filtres à manches du dépoussiéreur.

Ces métaux lourds peuvent avoir été volatilisés dans les fumées soit à l'état élémentaire pour les métaux sublimables à basse température, soit à l'état de composés volatils.

Grâce à la combustion en deux temps des déchets, parties fixes dans le lit fluidisé 10, parties volatiles dans la chambre de post-combustion, la limitation des températures et le régime de refroidissement des fumées de combustion, on réduit au minimum la formation des oxydes d'azote, dioxines et furannes.

En outre, grâce au recyclage des fines volantes, le taux d'imbrûlés dans les cendres est inférieur à 1 %.

Par ailleurs, en raison de la basse température de rejet des fumées, et de la limitation de leur volume résultant de la combustion avec un faible excès d'air, l'énergie perdue dans les fumées est sensiblement réduite, conduisant à un rendement thermique très élevé, de l'ordre de 88 %.

## Revendications

1. Procédé d'incinération de déchets urbains et analogues, avec épuration intrinsèque des fumées, où l'on introduit les déchets (en 12) préalablement fragmentés à une granulométrie appropriée, dans un foyer (10) à lit fluidisé dense alimenté à sa base (11) en air comburant primaire, où brûlent des parties fixes, tandis que s'en dégagent des parties volatiles comprenant, avec des gaz combustibles, des polluants tels qu'oxydes de soufre et gaz halogénés notamment, et emportant des particules solides ; on injecte de l'air comburant secondaire dans une chambre de post-combustion (13) surmontant le foyer (10) à lit fluidisé, où brûlent lesdits gaz combustibles avec formation de fumées ; et l'on récupère l'énergie thermique des fumées dans une chaudière (1) avec des parois (35, 36, 37, 38, 39) munies de tubes d'eau, divisée par des chicanes en parcours verticaux (16, 17, 19, 21) successifs, alternativement ascendants et descendants, le premier parcours (16), ascendant, prolongeant la chambre de post-combustion (13), selon lequel la chaudière (1) est divisée en au moins trois (16, 17, 19) parcours de fumée, on introduit dans le lit fluidisé (10) du calcaire en excès stoechiométrique au moins par rapport aux composés soufrés, comptés en oxydes de soufre ; on injecte, en début de troisième parcours (19) ascendant, de la chaux pulvérulente en quantité au moins suffisante pour neutraliser les gaz halogénés ; on recueille les solides pulvérulents en partie basse (18) entre les deuxième (17) et troisième (19) parcours et on introduit (par 29) ces solides pulvérulents dans le foyer (10) à lit fluidisé.

2. Procédé suivant la revendication 1, caractérisé en ce que la température et le débit de l'air primaire sont ajustés corrélativement en sorte de maintenir le lit fluidisé dans une plage de température prédéterminée.

3. Procédé suivant la revendication 2, caractérisé en ce que ladite plage de température prédéterminée est comprise entre 800° et 900°C.

4. Procédé suivant la revendication 1, caractérisé en ce que le rapport stoechiométrique entre le calcaire injecté dans le lit fluidisé (10) et la teneur en soufre des déchets, comptée en oxydes de soufre, est compris entre 2,5 et 3.

5. Procédé suivant la revendication 1, caractérisé en ce qu'un quatrième parcours de fumées (21), descendant, fait suite au troisième parcours.

6. Procédé suivant la revendication 5, caractérisé en ce que l'on analyse en permanence, en fin de quatrième parcours (21), la teneur en oxygène des fumées, et que l'on règle le débit d'air secondaire dans la chambre (13) pour maintenir cette teneur entre 5,5 et 7,5 % environ.

7. Procédé suivant la revendication 5, caractérisé en ce que l'on refroidit les fumées, en sortie du quatrième parcours de fumée (21), jusqu'à 140°C environ, par passage dans un échangeur (22) alimentant en eau la chaudière (1, 2), dit économiseur.

8. Procédé suivant la revendication 7, caractérisé en ce que l'on dépoussière les fumées entre l'économiseur (22) et une cheminée (25) pour leur dispersion dans l'atmosphère.

9. Procédé suivant la revendication 1, caractérisé en ce que l'injection de chaux, en début de troisième parcours (19), est exécutée pneumatiquement, dans une direction verticale ascendante.

## Patentansprüche

1. Verfahren zur Verbrennung von Stadtmüll und dgl. mit einer inneren Rauchgasreinigung, wobei der zuvor auf eine geeignete Granulometrie fragmentierte Müll (bei 12) in eine Feuerung (10) mit dichter Wirbelschicht eingebracht wird, welche an ihrer Basis (11) mit Primärverbrennungsluft gespeist wird, wo die festen Teile verbrennen, während die flüchtigen Teile freigesetzt werden, welche mit brennbaren Gasen Verunreinigungen, wie Schwefeldioxide und insbesondere halogenierte Gase, enthalten und feste Teilchen mitführen; Sekundärverbrennungsluft in eine Nachverbrennungskammer (13) eingebracht wird, welche über der Wirbelschichtfeuerung (10) liegt, wo die brennbaren Gase unter Bildung von Rauchgasen verbrennen; und die thermische Energie der Rauchgase in einem Kessel (1) mit Wänden (35, 36, 37, 38, 39), welche mit Wasserrohren versehen sind, zurückgewonnen werden, welcher Kessel durch in vertikalen, aufeinanderfolgenden, abwechselnd aufsteigenden und absteigenden Wegen verlaufende Hindernisse (16, 17, 19, 21) unterteilt ist, wobei der erste aufsteigende Weg (16) die Nachverbrennungskammer (13) verlängert, gemäß welcher der Kessel (1) in wenigstens drei Rauchgaswege (16, 17, 19) getrennt ist, wobei in das Wirbelbett (10) zumindest in bezug auf die Schwefelbestandteile, welche als Schwefeloxide gezählt werden, in stöchiometrischem Überschuß Kalkstein eingebacht wird; am Beginn des dritten aufsteigenden Weges (19) pulveriserter Kalk in wenigstens ausreichender Menge, um die halogenisierten Gase zu neutralisieren, eingebracht wird; die pulverförmigen Feststoffe im unteren Bereich (18) zwischen dem zweiten (17) und dritten (19) Weg gesammelt werden und (bei 29) diese pulverförmigen Feststoffe in die Wirbelschichtfeuerung (10) eingebracht werden.

2. Verfahren nach Anspruch 1, dadurch gekennzeichnet, daß die Temperatur und der Durchsatz an Primärluft in bezug aufeinander derart eingestellt werden, daß das Wirbelbett in einem vorbestimmten Temperaturbereich gehalten wird.

3. Verfahren nach Anspruch 2, dadurch gekennzeichnet, daß der vorbestimmte Temperaturbereich zwischen 800 und 900 °C liegt.

4. Verfahren nach Anspruch 1, dadurch gekennzeichnet, daß das stöchiometrische Verhältnis zwischen dem in das Wirbelbett (10) eingebrachten Kalkstein und dem Schwefelgehalt im Müll, welcher als Schwefeloxide gezählt wird, zwischen 2,5 und 3 liegt.

5. Verfahren nach Anspruch 1, dadurch gekennzeichnet, daß ein vierter absteigender Rauchgasweg (21) auf den dritten Weg folgt.

6. Verfahren nach Anspruch 5, dadurch gekennzeichnet, daß permanent am Ende des vierten Rauchgasweges (21) der Sauerstoffgehalt der Rauchgase gemessen wird und daß der Sekundärluftdurchsatz in der Kammer (13) geregelt wird, um diesen Gehalt zwischen etwa 5,5 und 7,5 % zu halten.

7. Verfahren nach Anspruch 5, dadurch gekennzeichnet, daß am Ausgang des vierten Rauchgasweges (21) die Rauchgase auf etwa 140 °C durch Durchgang durch einen Abgasvorwärmer genannten Tauscher (22), welcher die Kammer (1, 2) mit Wasser speist, geführt wird.

8. Verfahren nach Anspruch 7, dadurch gekennzeichnet, daß die Rauchgase zwischen dem Abgasvorwärmer (22) und einem Rauchabzug (25) für ihre Verteilung in die Atmosphäre entstaubt werden.

9. Verfahren nach Anspruch 1, dadurch gekennzeichnet, daß das Einbringen des Kalks am Beginn des dritten Weges (19) pneumatisch in einer vertikalen, ansteigenden Richtung durchgeführt wird.

## Claims

1. A process for incinerating domestic refuse and the like with intrinsic smoke cleaning in which the refuse (12) previously broken down to an appropriate particle size is introduced into a dense fluidized bed furnace (10), fed at its base (11) with primary combustion air, in which the fixed parts burn and volatile parts are released which comprise, along with combustible gases, pollutants such as sulphur oxides and halogenated gases in particular, and entrained solid particles; secondary combustion air is injected into a post-combustion chamber (13) over the fluidized bed furnace (10) in which said combustible gases burn with the formation of smoke; and the thermal energy of the smoke is recovered in a boiler (1) comprising walls (35, 36, 37, 38, 39) provided with water tubes subdivided by baffles into successive upward and downward vertical paths (16, 17, 19, 21), the upward first path (16) extending the post-combustion chamber (13), in accordance with which the boiler (1) is divided into at least three (16, 17, 19) smoke paths, limestone is introduced into the fluidized bed (10) in at least stoichiometric excess relative to the sulphurcontaining compounds, calculated as oxides of sulphur; powdered lime is injected at the start of the upward third path (19) in an amount at least sufficient to neutralise the halogenated gases; the powder solids are recovered at the low part (18) between the second (17) and third (19) paths and these powder solids are introduced (through 29) into the fluidized bed furnace (10).

2. A process according to claim 1, characterized in that the temperature and the flowrate of the primary air are adjusted correlatively to maintain the fluidized bed in a predetermined temperature range.

3. A process according to claim 2, characterized in that the said predetermined temperature range is between 800° and 900°C.

4. A process according to claim 1, characterized in that the stoichiometric ratio between the limestone injected into the fluidized bed (10) and the sulphur content of the refuse, calculated as sulphur oxides, is between 2.5 and 3.

5. A process according to claim 1, characterized in that a downward fourth smoke path (21) follows on from the third path.

6. A process according to claim 5, characterized in that the oxygen content of the smoke is continuously measured at the end of the fourth smoke path (21) and the supply of secondary air into the chamber (13) is controlled to maintain the said content approximately between 5.5 and 7.5%.

7. A process according to claim 5, characterized in that the smoke is cooled on emerging from the fourth smoke path (21), to approximately 140°C, by passing it through an exchanger (22), called an economizer, supplying water to the boiler (1, 2).

8. A process according to claim 7, characterized in that dust is removed from the smoke between the economizer (22) and a chimney (25) for dispersing it into the atmosphere.

9. A process according to claim 1, characterized in that the lime is injected in a vertically upwards direction at the start of the third path (19) by pneumatic means.
